# EUROPEAN PATENT SPECIFICATION

(11) **EP 4 509 757 B1**
(45) Date of publication and mention of the grant of the patent: **03.12.2025**
(21) Application number: 23191990.3
(22) Date of filing: 17.08.2023
(51) Int. Cl.: F21S 41/29, F21S 41/143

(54) **METHOD FOR ASSEMBLING A LIGHT MODULE FOR A VEHICLE HEADLAMP**
VERFAHREN ZUR MONTAGE EINES LICHTMODULS FÜR EINEN FAHRZEUGSCHEINWERFER
PROCÉDÉ D'ASSEMBLAGE D'UN MODULE LUMINEUX POUR UN PROJECTEUR DE VÉHICULE AUTOMOBILE

(43) Date of publication of application: 19.02.2025
(73) Proprietor: ZKW Group GmbH, 3250 Wieselburg (AT)
(72) Inventor: Jackl, Christian, 3250 Wieselburg (AT); Mitterlehner, Stefan, 3240 Mank (AT); Miemelaufer, Jakob, 4300 St. Valentin (AT); Hacker, Alexander, 3150 Wilhelmsburg (AT)
(74) Representative: Patentanwaltskanzlei Matschnig & Forsthuber OG

(56) References cited:
- EP-A1- 2 693 108
- WO-A1-2020/025419
- WO-A1-2021/213642
- DE-A1- 102008 033 416
- DE-A1- 102018 128 863
- FR-A1- 3 085 903

## Description

The invention relates to a method of assembling a light module for a vehicle headlamp. Due to the decreasing size of headlamps and headlamp light modules, it is necessary to find ways and methods of mounting components, especially primary optics, that can be used in this small size.

Due to the small size, it is becoming increasingly difficult to ensure uniform curing of adhesives, which leads to stresses at the bonding point and consequently to distortion of the position of the primary optics. The object of the invention is thus to provide an enhanced method of assembling a light module for a vehicle headlamp in order to overcome the disadvantages in the prior art. A method of assembling a light module for a vehicle headlamp is known from WO 2021/213642 A1.

To achieve this object, the method comprises the following steps in chronological order:
a) Providing of
   - a primary optics comprising a lens portion corresponding to a light source, and a fixation device, wherein the fixation device comprises at least one protrusion and a light entry surface for receiving a curing-light, wherein the at least one protrusion comprises a light output portion for exiting the curing-light,
   - a base body configured to hold at least one light source and the primary optics, wherein the base body comprises at least one fixation opening which is configured to receive the at least one protrusion of the primary optics,
   - at least one light source arranged on the base body,
b) Applying an adhesive into the at least one fixation opening of the base body;
c) Aligning the primary optics into an end position on the base body, so that light emitted by the at least one light source can be received by the lens portion of the primary optics, wherein in the end position the at least one protrusion of the primary optics is inserted into the at least one fixation opening of the base body;
d) Hardening the adhesive by emitting curing-light onto the light entry surface of the fixation device, wherein the fixation device is configured to direct the curing-light within the primary optics to the light output portion of the protrusion in order to harden the adhesive.

This ensures uniform curing of the adhesive, which does not lead to distortion of the primary optics in their final position.

Advantageously, in the end position of the primary optics on the base body, the light output portion of the protrusion of the primary optics is positioned in a way that the adhesive directly covers the light output portion. Or in other words, that the adhesive is disposed between the base body and the light output portion.

Advantageously, in step a) it is further provided a robot arm for holding the primary optics, wherein the fixation device comprises at least one holding element which is configured to correspond to the robot arm in a way that the robot arm can engage with the at least one holding element in order to hold the primary optics, wherein in step c) the robot arm is holding the primary optics via the holding element and aligns the primary optics.

Advantageously, the curing-light is an UV-light.

Advantageously, the UV-light is generated by a spot-type UV-light source. An additional beam-forming optics enables the UV-light to be coupled in with pinpoint accuracy via the light entry surface into the holding element. Advantageously, the adhesive is an UV-adhesive.

Advantageously, the adhesive is a hybrid adhesive. So-called hybrid adhesives are used for gluing in positions that cannot be reached straightforward with UV light due to special geometries. The thermal curing for these hybrid adhesives increases the load on the optical material. Additionally, complex devices are required to hold the end position precisely during this lengthy temperature curing process.

Advantageously, the robot arm comprises a UV-light source.

Advantageously, the robot arm comprises a UV-adhesive device for applying the UV-adhesive into the at least one fixation opening in step b).

Advantageously, the primary optics comprises at least two holding elements, which are arranged on opposite sides of the primary optics.

Advantageously, the at least one holding element is built as a protrusion.

Advantageously, the at least one holding element or/and the protrusion act as a lightguide for the curing-light in order to direct the curing light from the light entry surface to and out of the light output portion.

Advantageously, the at least one light source is built as a LED.

Advantageously, in a further step e) an additional adhesive is applied in the fixation openings, when the primary optics is in the end position on the base body, to further strengthen the fixation of the primary optics in the end position.

It should be noted here that - unless otherwise stated - explanations and features which refer to the method according to the invention also refer to the device according to the invention, and vice versa.

### Description of Figures

The invention is explained in more detail below with the aid of exemplary drawings. Here shows
- Fig.1: a cross section view of a light module assembled by a method according to the invention, wherein the light module comprises a primary optics aligned on a base body with a light source;
- Fig. 2: a perspective view of a robot arm which engages with the primary optics in order to align the primary optics onto the base body; and
- Fig. 3: a cross section view along the line A-A of the assembling step in Fig. 2.

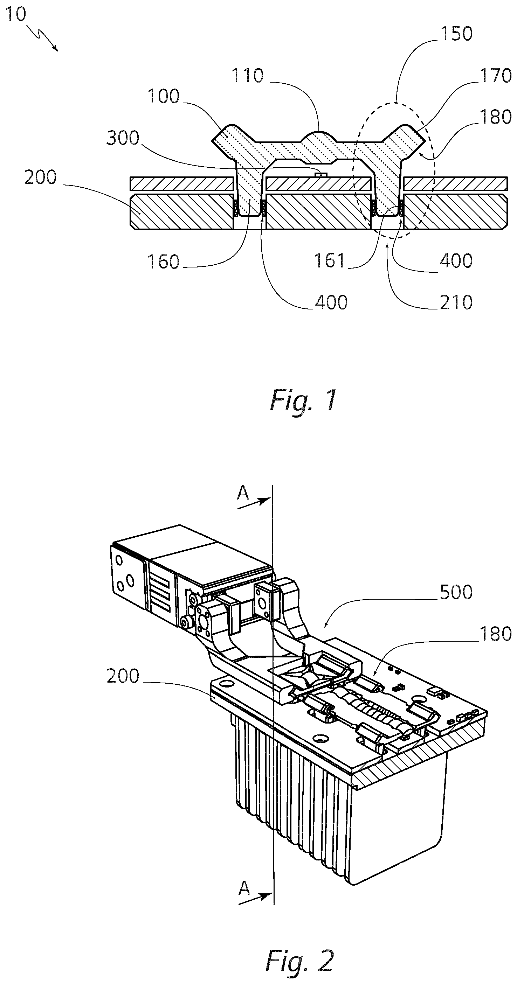

**Fig. 1** shows a light module **10** for a vehicle headlamp assembled by a method according to the invention, wherein the method comprises a first step a) in which a primary optics **100** is provided. The primary optics **100** comprises a lens portion **110** corresponding to a light source **300,** and a fixation device **150,** wherein the fixation device **150** comprises at least one protrusion **160** and a light entry surface **170** for receiving a curing-light, wherein the at least one protrusion **160** comprises a light output portion **161** for exiting the curing-light. In the shown example, the curing-light is an UV-light.

Further, a base body **200** is provided configured to hold at least one light source **300** and the primary optics **100,** wherein the base body **200** comprises two fixation openings **210** which is configured to receive the at least one protrusion **160** of the primary optics **100.** Moreover, a light source **300** arranged on the base body **200** is provided. In the shown example, the light source **300** is built as an LED.

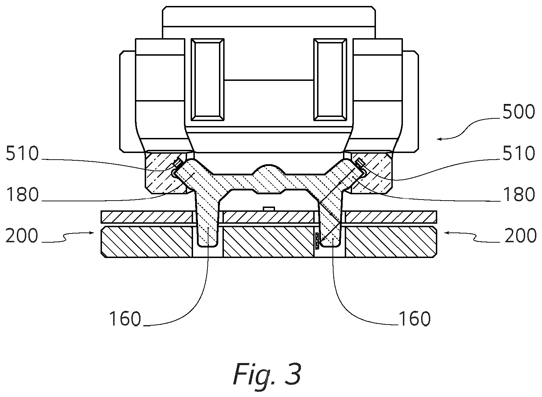

Further, it is provided a robot arm **500** (which can be seen in **Fig. 2** and **Fig. 3**) for holding the primary optics **100,** wherein the fixation device **150** comprises two holding elements **180** which are configured to correspond to the robot arm **500** in a way that the robot arm **500** can engage with the holding elements **180** in order to hold the primary optics **100.** As can be seen in **Fig. 1** to **Fig. 3****,** the holding elements **180** are built as protrusions **160** and are arranged on opposite sides of the primary optics **100.**

In a next step b) an adhesive **400** is applied into the two fixation openings **210** of the base body **200.** In the shown example, the adhesive is an UV-adhesive or a hybrid adhesive. Further, the robot arm **500** comprises a UV-adhesive device for applying the UV-adhesive **400** into the fixation openings **210** (not shown in the figures).

In a further step c) the primary optics **100** is applied into an end position on the base body **200,** wherein the robot arm **500** is holding the primary optics **100** via the holding elements **180** and aligns the primary optics **100,** so that light emitted by the light source **300** can be precisely received by the lens portion **110** of the primary optics **100,** wherein in the end position the at least one protrusion **160** of the primary optics **100** is inserted into the fixation openings **210** of the base body **200.**

In the end position of the primary optics **100** on the base body **200,** the light output portion **161** of the protrusion **160** of the primary optics **100** is positioned in a way that the adhesive **400** directly covers the light output portion **161.** Or in other words, that the adhesive **400** is disposed between the base body **200** and the light output portion **161,** as can be seen in **Fig. 1****.**

In the next step d) the UV-adhesive **400** is hardened by emitting UV-light onto the light entry surface **170** of the fixation device **150,** wherein the holding element **180** and the protrusion **160** act as a lightguide of the fixation device **150** and are configured to direct the UV-light within the primary optics **100** to the light output portion **161** of the protrusion **160** in order to harden the UV-adhesive **400.** In the shown example, in particular shown in **Fig. 3****,** the robot arm **500** comprises a UV-light source **510** for emitting UV-light onto the light entry surface **170,** wherein the UV-light source **510** is built as a spot-type UV-light source.

Further, **Fig. 3** shows an exemplary light ray emitted by the UV-light source **510** of the robot arm **500,** wherein one can see how the light ray enters the light entry surface **170** and is directed within the primary optics **100** and the protrusion **160** to and out of the light output portion **160** for curing the adhesive **400.**

Optionally, in a further step e) an additional adhesive (e.g., structural) is applied in the fixation openings **210,** when the primary optics **100** is in the end position on the base body **200,** to further strengthen the fixation of the primary optics **100** in the end position.

### LIST OF REFERENCE SIGNS

| | |
|---|---|
| Light module | 10 |
| Primary optics | 100 |
| Lens portion | 110 |
| Fixation device | 150 |
| Protrusion | 160 |
| Light output portion | 161 |
| Light entry surface | 170 |
| Holding element | 180 |
| Base body | 200 |
| Fixation opening | 210 |
| Light source | 300 |
| Adhesive | 400 |
| Robot arm | 500 |
| UV-light source | 510 |

## Claims

1. Method of assembling a light module (10) for a vehicle headlamp, comprising the following steps in chronological order:
a) Providing of
- a primary optics (100) comprising a lens portion (110) corresponding to a light source (300), and a fixation device (150), wherein the fixation device (150) comprises at least one protrusion (160) and a light entry surface (170) for receiving a curing-light, wherein the at least one protrusion (160) comprises a light output portion (161) for exiting the curing-light,
- a base body (200) configured to hold at least one light source (300) and the primary optics (100), wherein the base body (200) comprises at least one fixation opening (210) which is configured to receive the at least one protrusion (160) of the primary optics (100),
- at least one light source (300) arranged on the base body (200),
b) Applying an adhesive (400) into the at least one fixation opening (210) of the base body (200);
c) Aligning the primary optics (100) into an end position on the base body (200), so that light emitted by the at least one light source (300) can be received by the lens portion (110) of the primary optics (100), wherein in the end position the at least one protrusion (160) of the primary optics (100) is inserted into the at least one fixation opening (210) of the base body (200);
d) Hardening the adhesive (400) by emitting curing-light onto the light entry surface (170) of the fixation device (150), wherein the fixation device (150) is configured to direct the curing-light within the primary optics (100) to the light output portion (161) of the protrusion (160) in order to harden the adhesive (400).

2. Method according to claim 1, **wherein** in step a) it is further provided a robot arm (500) for holding the primary optics (100), wherein the fixation device (150) comprises at least one holding element (180) which is configured to correspond to the robot arm (500) in a way that the robot arm (500) can engage with the at least one holding element (180) in order to hold the primary optics (100), wherein in step c) the robot arm (500) is holding the primary optics (100) via the holding element (180) and aligns the primary optics (100).

3. Method according to claim 1 or 2, **wherein** the curing-light is an UV-light.

4. Method according to claim 3, wherein the UV-light is generated by a spot-type UV-light source.

5. Method according to any one of claims 1 to 4, **wherein** the adhesive (400) is an UV-adhesive.

6. Method according to any one of claims 1 to 5, **wherein** the adhesive (400) is a hybrid adhesive.

7. Method according to any one of claim 2 to 6, **wherein** the robot arm (500) comprises a UV-light source (510).

8. Method according to any one of claim 2 to 7, **wherein** the robot arm (500) comprises a UV-adhesive device for applying the UV-adhesive (400) into the at least one fixation opening (210) in step b).

9. Method according to any one of claims 2 to 8, **wherein** the primary optics (100) comprises at least two holding elements (180), which are arranged on opposite sides of the primary optics (100).

10. Method according to any one of claims 2 to 9, **wherein** the at least one holding element (180) is built as a protrusion (160).

11. Method according to any one of claims 2 to 10, wherein the at least one holding element (180) or/and the protrusion (160) act as a lightguide for the curing-light in order to direct the curing light from the light entry surface (170) to and out of the light output portion (161).

12. Method according to any one of claims 1 to 11, **wherein** the at least one light source (300) is built as a LED.

13. Method according to any one of claims 1 to 12, **wherein** in a further step e) an additional adhesive is applied in the fixation openings (210), when the primary optics (100) is in the end position on the base body (200), to further strengthen the fixation of the primary optics (100) in the end position.

## Patentansprüche

1. Verfahren zum Zusammenbau eines Lichtmoduls (10) für einen Fahrzeugscheinwerfer, das die folgenden Schritte in chronologischer Reihenfolge umfasst:
a) Bereitstellen von
- einer Primäroptik (100) mit einem einer Lichtquelle (300) entsprechenden Linsenabschnitt (110) und einer Fixiervorrichtung (150), wobei die Fixiervorrichtung (150) mindestens einen Vorsprung (160) und eine Lichteintrittsfläche (170) zum Empfangen von Aushärtungslicht umfasst, wobei der mindestens eine Vorsprung (160) einen Lichtaustrittsabschnitt (161) zum Austreten des Aushärtungslichts umfasst,
- einen Grundkörper (200), der so konfiguriert ist, dass er mindestens eine Lichtquelle (300) und die Primäroptik (100) hält, wobei der Grundkörper (200) mindestens eine Befestigungsöffnung (210) umfasst, die so konfiguriert ist, dass sie den mindestens einen Vorsprung (160) der Primäroptik (100) aufnimmt,
- mindestens eine auf dem Grundkörper (200) angeordnete Lichtquelle (300),
b) Aufbringen eines Klebstoffs (400) in die mindestens eine Befestigungsöffnung (210) des Grundkörpers (200);
c) Ausrichten der Primäroptik (100) in eine Endposition auf dem Grundkörper (200), sodass von der mindestens einen Lichtquelle (300) emittiertes Licht von dem Linsenabschnitt (110) der Primäroptik (100) empfangen werden kann, wobei in der Endposition der mindestens eine Vorsprung (160) der Primäroptik (100) in die mindestens eine Befestigungsöffnung (210) des Grundkörpers (200) eingeführt ist;
d) Aushärten des Klebstoffs (400) durch Emittieren von Aushärtungslicht auf die Lichteintrittsfläche (170) der Fixiervorrichtung (150), wobei die Fixiervorrichtung (150) so konfiguriert ist, dass sie das Aushärtungslicht innerhalb der Primäroptik (100) auf den Lichtaustrittsabschnitt (161) des Vorsprungs (160) richtet, um den Klebstoff (400) zu härten.

2. Verfahren nach Anspruch 1, wobei in Schritt a) ferner ein Roboterarm (500) zum Halten der Primäroptik (100) vorgesehen ist, wobei die Fixiervorrichtung (150) mindestens ein Halteelement (180) umfasst, das so konfiguriert ist, dass es mit dem Roboterarm (500) in einer Weise korrespondiert, dass der Roboterarm (500) mit dem mindestens einen Halteelement (180) in Eingriff kommen kann, um die Primäroptik (100) zu halten, wobei in Schritt c) der Roboterarm (500) die Primäroptik (100) über das Halteelement (180) hält und die Primäroptik (100) ausrichtet.

3. Verfahren nach Anspruch 1 oder 2, wobei das Aushärtungslicht ein UV-Licht ist.

4. Verfahren nach Anspruch 3, wobei das UV-Licht durch eine punktförmige UV-Lichtquelle erzeugt wird.

5. Verfahren nach einem der Ansprüche 1 bis 4, wobei der Klebstoff (400) ein UV-Klebstoff ist.

6. Verfahren nach einem der Ansprüche 1 bis 5, wobei der Klebstoff (400) ein Hybridklebstoff ist.

7. Verfahren nach einem der Ansprüche 2 bis 6, wobei der Roboterarm (500) eine UV-Lichtquelle (510) umfasst.

8. Verfahren nach einem der Ansprüche 2 bis 7, wobei der Roboterarm (500) eine UV-Klebstoffvorrichtung zum Auftragen des UV-Klebstoffs (400) in die mindestens eine Befestigungsöffnung (210) in Schritt b) umfasst.

9. Verfahren nach einem der Ansprüche 2 bis 8, wobei die Primäroptik (100) mindestens zwei Halteelemente (180) umfasst, die auf gegenüberliegenden Seiten der Primäroptik (100) angeordnet sind.

10. Verfahren nach einem der Ansprüche 2 bis 9, wobei das mindestens eine Halteelement (180) als Vorsprung (160) ausgebildet ist.

11. Verfahren nach einem der Ansprüche 2 bis 10, wobei das mindestens eine Halteelement (180) und/oder der Vorsprung (160) als Lichtleiter für das Aushärtungslicht dienen, um das Aushärtungslicht von der Lichteintrittsfläche (170) zum und aus dem Lichtaustrittsbereich (161) zu leiten.

12. Verfahren nach einem der Ansprüche 1 bis 11, wobei die mindestens eine Lichtquelle (300) als LED ausgebildet ist.

13. Verfahren nach einem der Ansprüche 1 bis 12, wobei in einem weiteren Schritt e) ein zusätzlicher Klebstoff in die Befestigungsöffnungen (210) aufgetragen wird, wenn sich die Primäroptik (100) in der Endposition auf dem Grundkörper (200) befindet, um die Befestigung der Primäroptik (100) in der Endposition weiter zu verstärken.

## Revendications

1. Procédé d'assemblage d'un module d'éclairage (10) pour un phare de véhicule, comprenant les étapes suivantes dans l'ordre chronologique :
a) Fourniture de
- une optique primaire (100) comprenant une partie lentille (110) correspondant à une source lumineuse (300), et un dispositif de fixation (150), dans lequel le dispositif de fixation (150) comprend au moins une saillie (160) et une surface d'entrée de lumière (170) pour recevoir une lumière de polymérisation, dans lequel la au moins une saillie (160) comprend une partie de sortie de lumière (161) pour faire sortir la lumière de polymérisation,
- un corps de base (200) configuré pour maintenir au moins une source lumineuse (300) et l'optique primaire (100), dans lequel le corps de base (200) comprend au moins une ouverture de fixation (210) qui est configurée pour recevoir la au moins une saillie (160) de l'optique primaire (100),
- au moins une source lumineuse (300) disposée sur le corps de base (200),
b) appliquer un adhésif (400) dans la au moins une ouverture de fixation (210) du corps de base (200) ;
c) aligner l'optique primaire (100) dans une position finale sur le corps de base (200), de sorte que la lumière émise par la au moins une source lumineuse (300) puisse être reçue par la partie lentille (110) de l'optique primaire (100), dans laquelle, dans la position finale, la au moins une saillie (160) de l'optique primaire (100) est insérée dans la au moins une ouverture de fixation (210) du corps de base (200) ;
d) Durcir l'adhésif (400) en émettant une lumière de polymérisation sur la surface d'entrée de lumière (170) du dispositif de fixation (150), dans lequel le dispositif de fixation (150) est configuré pour diriger la lumière de polymérisation à l'intérieur de l'optique primaire (100) vers la partie de sortie de lumière (161) de la saillie (160) afin de durcir l'adhésif (400).

2. Procédé selon la revendication 1, dans lequel, à l'étape a), il est en outre prévu un bras robotisé (500) pour maintenir l'optique primaire (100), dans lequel le dispositif de fixation (150) comprend au moins un élément de maintien (180) qui est configuré pour correspondre au bras robotisé (500) de manière à ce que le bras robotisé (500) puisse s'engager avec le au moins un élément de maintien (180) afin de maintenir l'optique primaire (100), dans lequel, à l'étape c), le bras robotisé (500) maintient l'optique primaire (100) via l'élément de maintien (180) et aligne l'optique primaire (100).

3. Procédé selon la revendication 1 ou 2, dans lequel la lampe à polymériser est une lampe à UV.

4. Procédé selon la revendication 3, dans lequel la lumière UV est générée par une source de lumière UV de type spot.

5. Procédé selon l'une quelconque des revendications 1 à 4, dans lequel l'adhésif (400) est un adhésif UV.

6. Procédé selon l'une quelconque des revendications 1 à 5, dans lequel l'adhésif (400) est un adhésif hybride.

7. Procédé selon l'une quelconque des revendications 2 à 6, dans lequel le bras robotisé (500) comprend une source de lumière UV (510).

8. Procédé selon l'une quelconque des revendications 2 à 7, dans lequel le bras robotisé (500) comprend un dispositif adhésif UV pour appliquer l'adhésif UV (400) dans au moins une ouverture de fixation (210) à l'étape b).

9. Procédé selon l'une quelconque des revendications 2 à 8, dans lequel l'optique primaire (100) comprend au moins deux éléments de maintien (180) qui sont disposés sur les côtés opposés de l'optique primaire (100).

10. Procédé selon l'une quelconque des revendications 2 à 9, dans lequel le au moins un élément de maintien (180) est construit comme une saillie (160).

11. Procédé selon l'une quelconque des revendications 2 à 10, dans lequel le au moins un élément de maintien (180) et/ou la saillie (160) agissent comme un guide de lumière pour la lumière de polymérisation afin de diriger la lumière de polymérisation depuis la surface d'entrée de lumière (170) vers et hors de la partie de sortie de lumière (161).

12. Procédé selon l'une quelconque des revendications 1 à 11, dans lequel la au moins une source lumineuse (300) est conçue comme une LED.

13. Procédé selon l'une quelconque des revendications 1 à 12, dans lequel, dans une étape supplémentaire e), un adhésif supplémentaire est appliqué dans les ouvertures de fixation (210), lorsque l'optique primaire (100) est en position finale sur le corps de base (200), afin de renforcer davantage la fixation de l'optique primaire (100) en position finale.
